# EUROPEAN PATENT APPLICATION

(11) **EP 0 677 236 A2**
(43) Date of publication of application: **18.10.1995**
(21) Application number: 95201725.9
(22) Date of filing: 13.08.1991
(51) Int. Cl.: A01B 49/06

(54) **A soil cultivating machine**

(30) Priority: 24.08.1990 NL 9001873
(62) Divisional of application: 91202058.3
(71) Applicant: C. van der Lely N.V., NL-3155 PD Maasland (NL)
(72) Inventor: Bom, Cornelis Johannes Gerardus, NL-3181 VC Rozenburg (NL); Ouwerkerk, Cornelis Gerardus, NL-3181 BE Rozenburg (NL)
(74) Representative: Mulder, Herman

(57) **Abstract**

The invention relates to a soil cultivating machine, in particular a rotary harrow, comprising a first frame portion (1) couplable to a tractor, a second frame portion (2) coupled movably in height relative to the first frame part (1), provided with soil cultivating members (3) and suspendable from the soil by a roller (4), the machine further comprising drilling elements including seed pipes (73), possibly provided with coulters (74) and coupled to a carrier beam (68), whereby the the carrier beam (68) is connected to the second frame portion (2) by means of a framework (86, 87, 88) stretching from the second frame portion in rearward direction over a location for the roller in the machine and comprising at least two spaced apart beams (87, 88) extending predominantly in the direction of operative travel and mutually connected by at least a coupling beam (86), the framework (86, 87, 88) being hingeably connected to the second frame portion (2) and being kept in position and being adjustable in height by means of at least one adjusting member (98) connected with the second frame portion(2).

## Description

The present invention relates to a soil cultivating machine, in particular a rotary harrow, comprising a first frame portion couplable to a tractor, a second frame portion coupled movably in height relative to the first frame portion, provided with soil cultivating members and suspendable from the soil by a roller, the machine further comprising drilling elements including seed pipes, possibly provided with coulters and coupled to a carrier beam.

A suchlike machine is for instance known from the European Patent Application EP-A-0 271 119. In this machine the carrier beam is hingeably connected with the arms for a roller supporting the second frame part. The machine is provided with an adjusting element for hinging the carrier beam and the seed pipes mounted thereon into upward direction when the machine turns on the headland of a field. It appears in practice, however, that the hinges by which the arms for the roller are connected with the second frame parts wear relatively quickly and sometimes break down, assumably due to high forces and moments caused by the drilling elements connected to the roller construction. An obvious solution to this problem would be the stiffening or the reinforcement of the hinge. This, however, may provoke a chain of further necessary reinforcements in the machine, starting e.g. with the side plate of the second frame portion to which the hinge is connected. In cases where the machine is composed of modules, such as the second frame portion, such a reinforcement would mean an unnecessary raise of costs in machines wherein the module is not subjected to the described forces. The present invention seeks to improve the machine and its production.

According to the invention, this is achieved in that the carrier beam is connected to the second frame portion by means of stretching from the second frame portion in rearward direction over a location for the roller in the machine and comprising a framework with at least two spaced apart beams extending predominantly in the direction of operative travel and mutually connected by at least a coupling beam, the framework being hingeably connected to the second frame portion and being kept in position and being adjustable in height by means of at least one adjusting member connected with the second frame portion. Such a solution is further advantageous in that the roller may also more easily be exxhanged to adapt the machine to prevailing conditions. The present invention is also advantageous in cases where the roller is connected with the frame in a so-called floating manner, i.e. wherein the trailing side of the second frame portion rests on the upperside of the arms for the roller and is freely movable upwardly for overcoming obstacles in the soil. As a consequence, in such a construction the roller may swing downwardly when the machine is lifted for headland turning. This, however, would in the known construction bring the seed pipes close to the ground, so that the risk of contacting the soil during turning, and thereby the risk of damage to the seed pipes, would be increased.

In accordance with the invention, it is advantageous that the carrier structure comprises a parallelogram structure which is coupled in two pivot points to the frame and in the two other pivot points to the frame portions. In particular, such a structure is advantageous when there are present supporting elements which are rigidly connected to a frame portion, in which supporting elements are located the pivot points, by means of which the parallelogram structure is coupled to the relevant frame portion. Due to such supporting elements, the parallelogram structure can be comparatively short, so that the total length of the machine, reckoned rearwardly, can be limited to a considerable extent. In accordance with a further constructional feature arising from the invention, the lower pivot point of the parallelogram structure in the supporting elements is located behind the centre of the relevant frame portion.

Furthermore, according to the invention, a supporting element is designed in the form of a plate and is of such a shape that therebehind, but at least in the position thereof above the frame portion, a coupling shaft required for the drive of the soil working members can extend. Also, there are present central transmission means which can be coupled to the power take-off shaft of a tractor or a similar suchlike vehicle, as well as further transmission means arranged on the relevant frame portions, each of which further transmission means is coupled via a coupling shaft to the central transmission means, by means of which further transmission means the soil working elements can be driven. Hereby it is made possible to arrange both the coupling shaft and the central transmission means within the reach of the frame portions, which contributes to a reduction of the torque transferred by the weight of the machine via the three-point lifting hitch to the rear axle of the tractor. In this connection, according to the invention, an advantageous construction can be obtained when the central transmission means are located in a box connected to the frame, while the coupling point of the coupling shafts on the central transmission means is located behind the centre of the relevant frame portions. Here, a coupling shaft extends substantially in the longitudinal direction of the relevant frame portion.

A particular feature of the invention relates to a soil cultivating machine comprising a frame and frame portions which are provided with soil working members, as well as a carrier structure, the one end of which is coupled to the frame and the other to the frame portions, while there are present central transmission means which are located in a box connected to the frame and which can be coupled to the power take-off shaft of a tractor or a similar suchlike vehicle, as well as further transmission means arranged on the relevant frame portions, each of which further transmission means is coupled via a relevant coupling shaft to the central transmission means, by means of which further transmission means the soil working elements can be driven, the coupling point of the coupling shafts on the central transmission means being located behind the centre of the relevant frame portions.

During operation, soil cultivating machines usually encounter strong reaction forces in varying directions, as a result of which they are shaken heavily. These movements are absorbed inter alia via the coupling of the machine to the tractor or, as in the present embodiment, via the said carrier structure in the machine. This may lead to an overload. Therefore, in accordance with the invention, the soil cultivating machine is provided with a carrier structure which includes ball joints. So, a further particular feature of the invention relates to a soil cultivating machine comprising a frame and at least one frame portion provided with soil working members, as well as a carrier structure, the one end of which is coupled to the frame and the other to the frame portion provided with soil working members, the said carrier structure including ball joints. By means of the ball joints, the frame portion provided with soil working members is capable of moving freely to some extent, so that the shaking movements of such a frame portion need be absorbed by inter alia the carrier structure to a lesser extent.

Also in accordance with the invention, the ball joints have a particular application when the soil cultivating machine comprises a frame and at least two frame portions provided with soil working members, each of which frame portions, independently of each other, is movable in height relative to the frame. In this case, too, the function of the ball joints consists in the possibility of allowing the two frame portions, independently of each other, to adapt themselves to the unevennesses in the soil. For example, it is possible that one of the frame portions takes up a position at an angle with a horizontal, while the other one remains horizontally, without the carrier structure being twisted owing to the weight of the frame portion inclined at an angle with the frame. According to the invention, such a carrier structure is provided in at least two pivot points of the parallelogram with ball joints which, relative to the direction of operative travel of the machine, are present at the front side and/or at the rear side of the carrier structure.

In accordance with a still further feature of the invention, the frame consists of a central section and at least two further sections which, relative to the central frame, are movable in height about a shaft, to which further sections are arranged the frame portions provided with soil working members, each of which frame portions includes a seed drill having a distributing mechanism for the seed material, which distributing mechanism is arranged capably of pivotal movement in a pivot point at some distance above a seed drill carrier and relative thereto, while each of the distributing mechanisms is fitted at a corresponding side away from the centre of the relevant carrier, there being provided adjusting means via which a distributing mechanism can be adjusted relative to the pivot point at an acute angle with its position during operation.

Therefore, in accordance with a particular feature, the invention relates to a soil cultivating machine comprising a frame which consists of a central section and at least two further sections, which further sections, taken in the direction of operative travel of the machine, are connected on either side of the central section via a shaft to said central section and are movable in height about the said shaft, and to which further sections there are connected further frame portions provided with soil working members, to which further frame portions there is connected a seed drill, which seed drill is provided with a distributing mechanism for the seed material, which distributing mechanism is arranged capably of pivotal movement in a pivot point at some distance above a seed drill carrier and relative thereto, while each of the distributing mechanisms is fitted at a corresponding side away from the centre of a relevant carrier, there being provided adjusting means via which a distributing mechanism can be adjusted relative to the pivot point at an acute angle with its position during operation. Such a construction makes it possible to adjust the seed drills in an advantageous manner to a transport position, without the distributing mechanisms coupled thereto contacting each other or the seed supply tubes. According to the invention, the adjusting means include an adjusting cylinder and a resilient element, which adjusting cylinder is capable of adjusting the distributing mechanism to a transport position against the action of said resilient element, and which resilient element is capable of adjusting the distributing mechanism to an operative position. During transport, the distributing mechanism according to the invention can be maintained in a transport position by means of a hydraulic locking.

A still further particular feature of the invention relates to an agricultural machine comprising a frame and a seed drill having at least two parts located side by side in the longitudinal direction thereof and being each capable of movement about a shaft relative to the frame, each of which seed drill parts is provided with a distributing mechanism for the seed material, which distributing mechanism is arranged capably of pivotal movement in a pivot point at some distance above a carrier of the relevant seed drill part and relative thereto, while each of the distributing mechanisms is fitted at a different distance from the relevant shaft in a direction transversely to the direction of operative travel of the machine, there being provided adjusting means via which a distributing mechanism can be adjusted relative to the pivot point at an acute angle with its position during operation.

In accordance with the invention, the carrier structure furthermore comprises a lifting device having a lever mechanism for the upward and downward movement of a frame portion provided with soil working members. In this connection, the lifting device includes an operating cylinder for operating the lever mechanism, the operating cylinder being connected to the frame capably of pivotal movement. Accordingly, the lever mechanism is hydraulically operable and is connected to the frame capably of pivotal movement. This has as an advantage that, during operation, the machine frame can be adjusted to a favourable working depth by means of the three-point lifting hitch of the tractor, so that upon turning only the lever mechanism need be operated for removing the soil working members and the seed coulters from the soil, while the adjusted working depth of the machine remains maintained. In an advantageous embodiment of the invention, for each of the frame portions there is present a lever mechanism, and each lever mechanism includes only one hydraulic cylinder. Also, according to the invention, a lever mechanism includes means for allowing a relevant frame portion provided with soil working members to make, within a certain interval, a free movement in the upward direction. According to a still further favourable construction, each of the frame portions can be lifted by the lifting device in at least two interspaced points, and the operating cylinders of the lifting device can be activated simultaneously. In this connection, the lifting device is capable of effecting a difference in height between a frame portion and the frame of more than 20 cms. Furthermore, according to the invention, the soil cultivating machine frame consists of at least two frame beams which are located at different heights and which are interconnected by at least two struts, the lower frame beam having a square profile.

In embodiments wherein a frame portion is coupled to an implement for bringing granular material on or into the soil, the coupling according to the invention is rigid, but adjustable. This adjustability comprises an adjustment in height, in distance and in position. The adjustment in distance can be effected by means of a pin/aperture construction. The coupling of the seed drill to a frame portion is effected by means of a three-point lifting hitch. In this connection there are provided means for transferring the height adjustment of the implement to a further coupling point of this implement to the frame portion. Such a construction has as an advantage that the seed drill can be adjusted at various distances from a frame portion provided with soil working members, which is advantageous in that between a frame portion and the seed drill there may be active a large roller or a small one. Therefore, in accordance with the invention, between the implement and a frame portion there is provided a roller which is movable in height. The said construction with various adjustments is furthermore advantageous in that the working depth of the seed coulters relative to a frame portion can be adjusted, and that the position of the seed coulters, or of a vortex tube of a distributing mechanism, can be adjusted in the desirable manner during operation. A still further particular construction according to the invention relates to an indicator means, by means of which is shown a deviation from the horizontal position of the arms of the parallelogram structure. The indicator means is coupled directly to one of the arms of the parallelogram structure and is positioned such that the position thereof can be observed visually from the driver's seat of the tractor or similar suchlike vehicle to which the soil cultivating machine is coupled, and/or that there are present mechanical or electronical means capable of rendering the position of the indicator means in the cab of the tractor or similar suchlike vehicle.

For a better understanding of the invention and to show how the same may be carried into effect, reference will now be made, by way of example, to the accompanying drawings, in which:

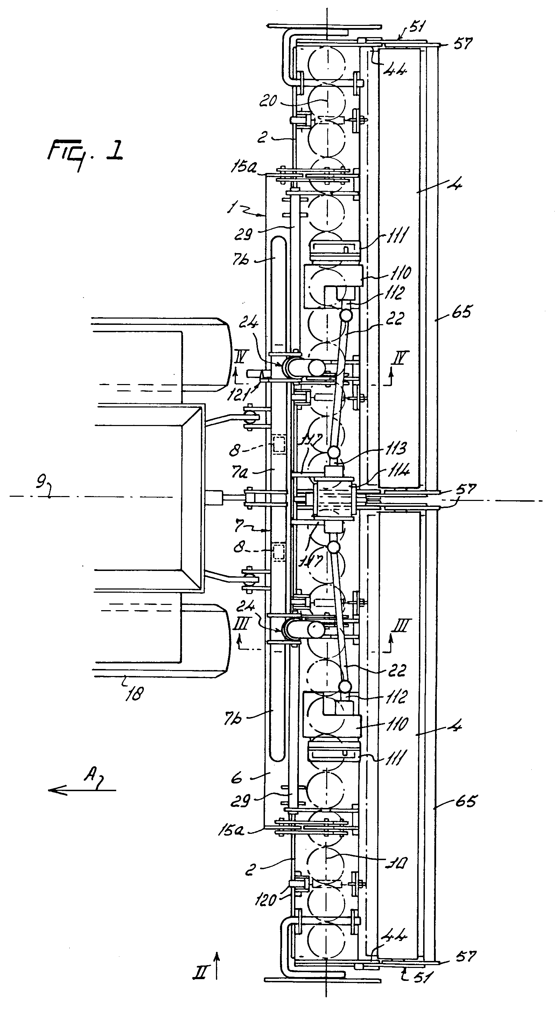

Figure 1 is a plan view of a soil cultivating machine, in this case a rotary harrow, coupled to a tractor, which machine is suitable for a seed drill to be coupled thereto;

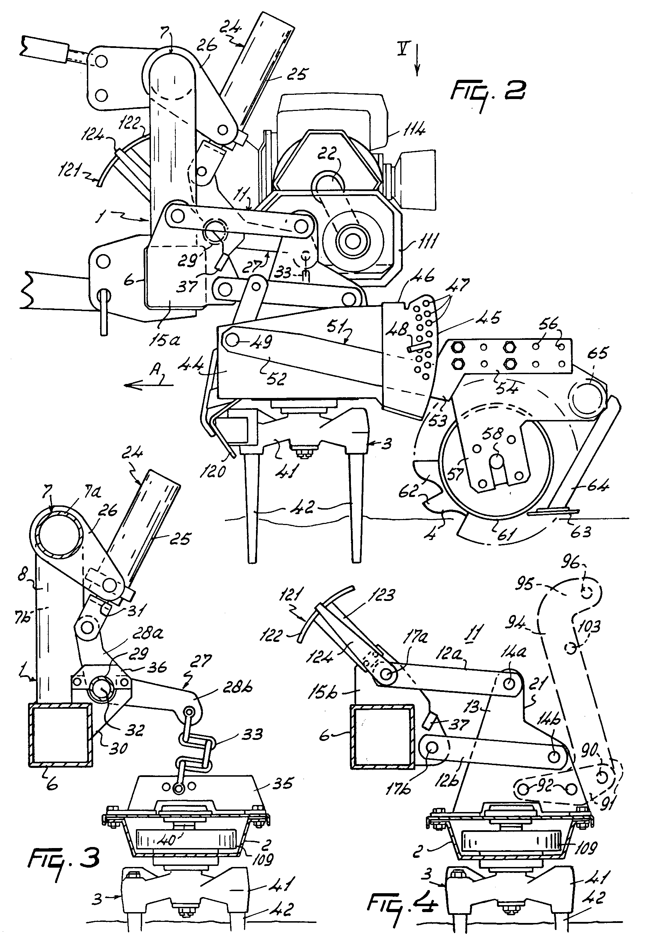

Figure 2 is a side view of the soil cultivating machine, taken in the direction of the arrow II in Figure 1;
Figure 3 is a cross-sectional view of part of the soil cultivating machine, taken on the line III-III in Figure 1;

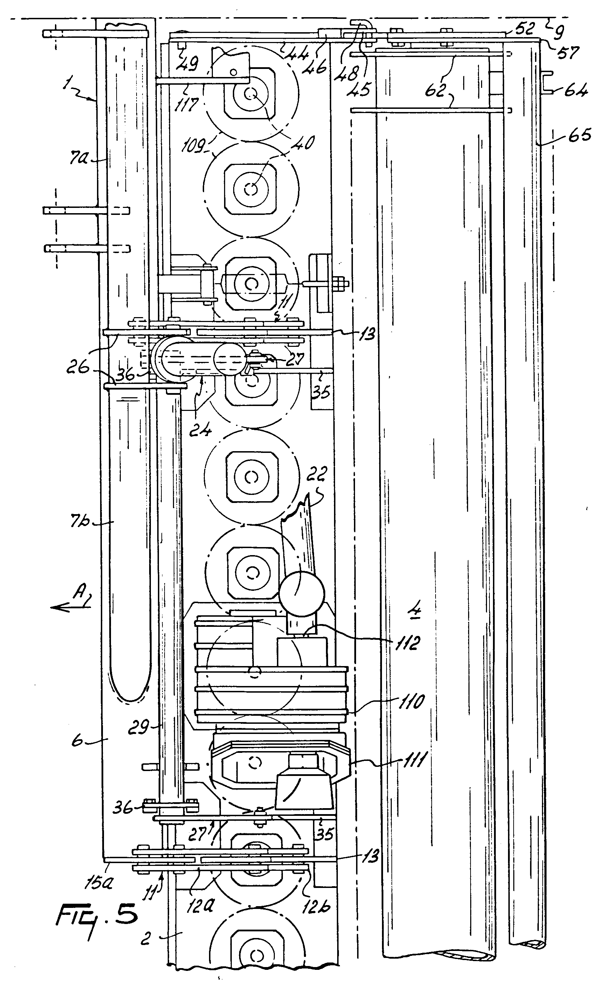

Figure 4 is a cross-sectional view of part of the soil cultivating machine, taken on the line IV-IV in Figure 1;
Figure 5 is a plan view of part of the left half of the machine;
Figure 6 is a side view of the soil cultivating machine according to Figure 1, a seed drill being coupled thereto;

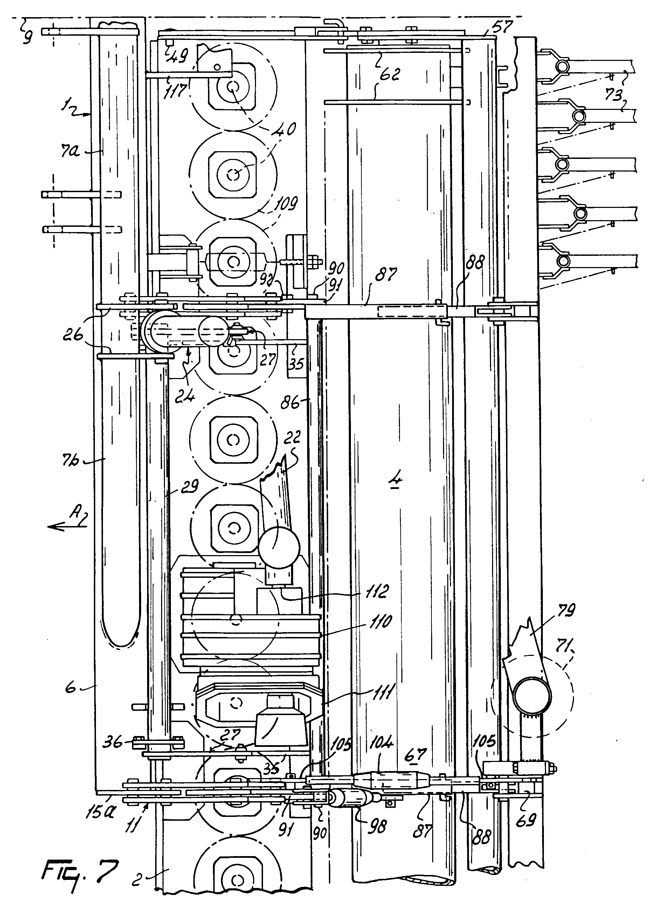

Figure 7 is a plan view of part of the left half of the machine, as shown in side view in Figure 6,
Figure 8 is a schematic plan view of the soil cultivating machine cum seed drill, coupled to a tractor;
Figure 9 is a plan view of a soil cultivating machine according to a second embodiment, wherein parts of the machine are pivotable in height relative to a central frame section for the purpose of transport thereof;
Figure 10 is a front view of the soil cultivating machine, taken in the direction of the arrow X in Figure 9, one frame portion having been shown in the transport position;
Figure 11 is an enlarged detail of the support of the vortex tube with distributing mechanism of a seed drill, with which the machine according to the second embodiment may be equipped;
Figure 12 is a side view, taken in the direction of the arrow XII in Figure 11;
Figure 13 schematically shows in plan view the positioning of the distributing mechanisms during operation as well as, in interrupted lines, a possible positioning after adjustment;
Figure 14 schematically shows in rear view the positioning of the distributing mechanisms during operation as well as a possible positioning in the transport position of the machine;
Figure 15 shows in front view a possibly occurring position of a frame portion relative to the frame during operation, and
Figure 16 shows in detail a ball joint connection of the parallelogram structure, by means of which a frame portion is connected to the frame.

In the drawings, corresponding parts have been denoted by the same reference numerals.

The invention is by no means limited to the embodiments shown and described herein; they only serve as an illustration of the inventive idea.

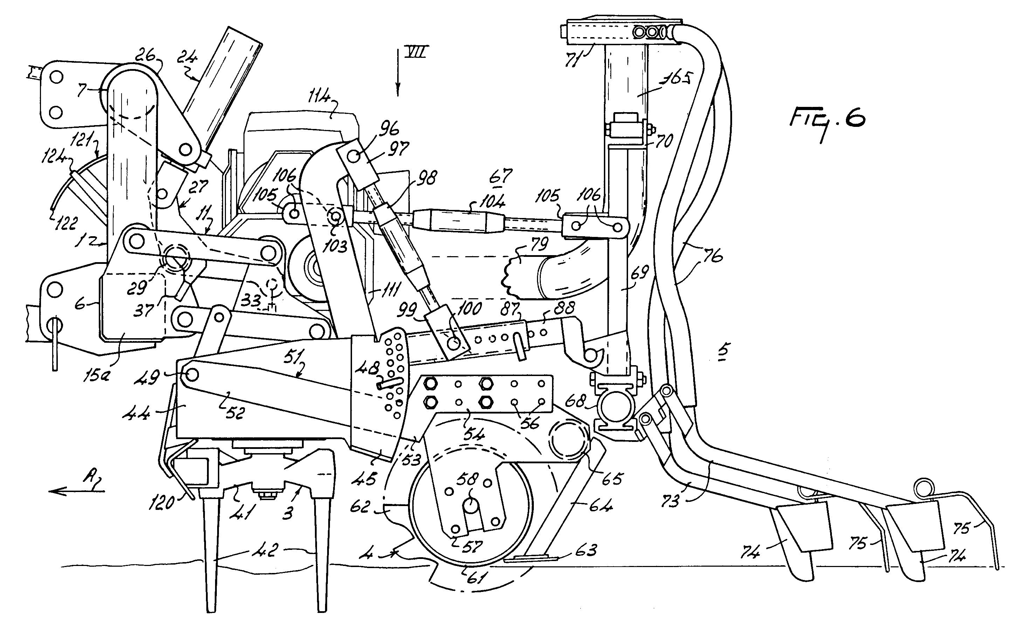

The implement shown in the drawings relates to a soil cultivating machine, in particular to a machine for preparing a seed bed. The machine comprises a frame 1, which in known per se manner is provided with attachment portions for coupling to the three-point lifting hitch of a tractor and extends transversely to the direction of operative travel of the tractor. At the frame 1 there are arranged two frame portions 2 which are provided with power-driven rotors 3, which are rotatable about vertical shafts, for working the soil. At the rear side of each of the frame portions 2 there is mounted a roller 4. Furthermore, to both frame portions 2 there may be coupled a seed drill 5 (Figure 6), which extends at least substantially parallel to the frame 1 and to the frame portions 2.

Each of the frame portions 2, each of the rollers 4 and the seed drill have a working width of 3 metres. Because of the size and the weight of the aforementioned combination, the frame 1 is of a heavy and reinforced construction. The frame 1 is trestle-shaped and includes a square lower frame beam 6 and, extending substantially parallel thereto, a round upper frame beam 7, the latter being connected to the former by means of two square struts 8. The upper frame beam 7 consists of a horizontally extending straight central portion 7a and, extending obliquely downwardly on either side thereof, two straight end portions 7b, the lower ends of which are welded onto the lower frame beam 6. From its centre 9, the horizontal upper frame beam portion 7a extends through at least a quarter of the width of a frame portion 2. On either side of the centre 9 of the frame 1 there are arranged at some interspace two parallelogram partial structures 11, which together will be called "parallelogram structure" in what follows. Via these parallelogram partial structures, the relevant frame portions 2 are connected to the frame 1. This construction ensures that, upon a movement in height, a frame portion 2 remains in a straight position relative to the frame 1. Each parallelogram partial structure 11 comprises two pairs of superjacent arms 12, the one ends of which arms are arranged capably of pivotal movement at a supporting element 13 designed as an attachment plate and provided on the top side of a frame portion 2, the said supporting element 13 extending parallel to the centre line 9 and being upwardly directed, while the other ends of said arms are arranged capably of pivotal movement in two superjacent attachment points 17a and 17b on an attachment plate 15 which is mounted on the lower frame beam 6. Of each pair, the respective arms 12 are always arranged on either side of the said attachment plates or supporting elements 13, 15. Seen in side view, the pivot points 14a, 14b connected to the frame portion are located behind the centre 20 of the relevant frame portion. Furthermore, the parallelogram partial structure is such that the upper arm 12a, relative to the lower arm 12b, is shifted in the direction of operative travel. Of the two pivot points 17a, 17b connected to the lower frame beam 6, the lower pivot point 17b is located behind and level with the said lower frame beam 6, while the upper pivot point 17a is located directly thereabove. The parallelogram partial structure pivot points located at the outer end of the lower frame beam 6 are arranged in an attachment plate 15a, which closes the end of the said frame beam. The parallelogram partial structures at the inner side of the frame are attached to a plate 15b, wherein there is arranged a fitting recess to provide a fixation around the lower frame beam 6.

The upwardly directed plates 13, by means of which the parallelogram partial structures are attached to a frame portion, have at their rear sides above the lower pivot point 14b a recess 21, which is of such a size that a coupling shaft 22 required for the drive of the soil working members 3 of the frame portion 2 can extend therein, and wherein it can move upwardly, from a height just above the lower pivot point 14b, freely and unhampered by obstacles. Seen in the direction of operative travel A, the size of the recess 21 is such that the said coupling shaft 22 having a diameter of slightly more than 10 cms may be present above the frame portion 2. The recess 21 allows of a free movement of the coupling shaft 22 in the upward direction.

In addition to the parallelogram partial structure, the connection between the frame portions 2 and the frame 1 comprises a lifting device 24 which is driven by means of an operating cylinder 25. By means of this lifting device 24, a frame portion 2 can be moved in height relative to the frame 1. The operating cylinder 25 is arranged capably of pivotal movement between two lugs 26 welded onto the horizontal upper frame beam portion 7a. On either side of the centre 9 of the frame 1, and at a distance of approximately one third of the length of a frame portion, there is provided a cylinder 25. The lifting device 24 furthermore includes a lever mechanism 27 consisting of a lever 28 and a pipe 29, which pipe is supported capably of pivotal movement in a fittingly round aperture provided in supporting plates 30 which are directed upwardly and parallel to the centre line 9 of the machine. The supporting plates 30 are attached to the lower frame beam 6 at some interspace. By means of its, relative to the direction of operative travel, front lever arm 28a, the lever 28 is connected pivotably to the rod 31 of the lifting cylinder 25. In this embodiment, the cylinder is designed as a hydraulic cylinder; it may also be a pneumatic or electromechanical one. The rear lever arm 28b located behind the pivot point 32 is connected to the frame portion 2 by means of a chain 33. The chain 33 is connected to the frame portion 2 via a lifting plate 35 which extends upwardly and parallel to the centre line 9, and which is arranged over substantially the entire width of the frame portion 2. By means of a coupling link, the chain 33 engages the frame portion 2 in the vicinity of the transverse centre line 20 thereof. The lever movement produced by the cylinder 25 is transferred via an extension of the pipe 29, by means of which the lever 28 is supported pivotably, to a further outwardly located, identical pivot point of the lever mechanism 27. In the same position, there is fixed to the pipe 29 in this pivot point a rear lever arm 28b only. In the same manner as described in the foregoing, this rear lever arm 28b is connected to the frame portion 2, so that, during lifting, a frame portion 2 is engaged in two interspaced points. In both pivot points 32, the pipe 29 is locked in the supporting plate 30 by means of a locking plate 36, which has also a fittingly round aperture and is attached over the pipe against the supporting plate 30. The outer rear lever arm 28b is located, from the outer end of a frame portion, at rather more than one third of the frame portion width. The lever mechanism 27 as a whole is located between the arms of the two parallelogram partial structures 11, by means of which the frame portions 2 are connected to the frame 1. The lifting device 24 allows of a movement in height of a frame portion 2 relative to the frame of approximately 24 cms. In the upward direction, the movement of a frame portion 2 is limited in that its top side contacts the supporting plate 15a, 15b, by means of which the arms 12a, 12b are connected to the lower frame beam 6. In the downward direction, the movement of a frame portion 2 is limited in that the upper parallelogram arms 12a contact a stop 37 provided at the rear side of the supporting plate 15b.

Each of the frame portions 2, which are in alignment, supports at least substantially vertical shafts 40 of soil working members 3, which shafts are located at equal interspaces of preferably 25 cms. At the end of a shaft 40 projecting from the bottom side of a frame portion 2, each of the soil working members 3 includes an at least substantially horizontal carrier 41, said carrier having near its ends downwardly extending soil working elements 42 preferably in the form of tines. The ends of each of the respective frame portions 2, which have a hollow profile, are closed by means of end plates 44 which extend upwardly and at least substantially parallel to the direction of operative travel A of the machine in a vertical plane. These plates 44 extend beyond the frame portion profile both upwardly and rearwardly. At the top, the plate edge extends from approximately 7 cms above the front side of the frame portion 2 obliquely rearwardly to approximately 12 cms above the rear side thereof. Measured from the top edge of the frame portion 2, the plate 44 extends at its rear end approximately 12 cms beyond the profile thereof. In the vicinity of the rear edge of the frame portion 2, there is arranged against the outside of the end plate 44 a parallel plate 45 which, according to the same measurements as of the rearwardly extending end plate, extends parallel thereto but at some distance therefrom. At its top and bottoms ends, this parallel plate 45 is welded onto the end plate 44 by means of a rectangularly bent welding piece 46 having a length of approximately 5 cms. At their rear ends, the two plates 44, 45 are provided with two rows of apertures 47 which are arranged such that a fitting pin 48, inserted through both plates, can be in a horizontal position and transversely to the direction of operative travel A of the machine. Relative to the longitudinal centre line of a pin 49 arranged at the top front end of the end plate 44, the rows of apertures 47 are located on the periphery of two imaginary circles having a diameter of 45.5 and 48 cms, respectively. The apertures 47 in the rows are arranged at a regular centre interspace of approximately 1.5 cms. The rows of apertures 47 are shifted relative to each other and start both near the top edges of the plates 44, 45. In this embodiment, the rearmost row includes eight apertures, while the other row has seven apertures. Near its top front side, each of the end plates 44 of a frame portion 2 is provided with a pin 49 which extends transversely to the direction of operative travel A, the arrangement being such that these pins 49 are in alignment. About each of the pins 49 there is arranged freely pivotably a roller arm 51 which extends rearwardly along the outside of the plate. Each roller arm 51 includes a portion 52 which, from the pin, extends at a sharp angle with the horizontal, of rather less than 45 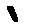 , obliquely downwardly and rearwardly and merges via an obliquely upwardly and rearwardly directed intermediate portion 53 into an at least substantially horizontal end portion 54. The said intermediate portion 53 is located behind and in the immediate vicinity of the rearmost row of apertures and has a length of almost 10 cms. The combination of end plate 44 and parallel plate 45 ensures that the movement of the roller arms 51 is guided in a vertical plane and that this movement remains limited to a vertical pivoting about the said pin 49. Both at the top end and at the bottom end, the pivotal movement is limited by the bent portions 46 of the parallel plate 45, by means of which portions the latter is fixed to the end plate 44.

In the horizontal arm end portion 54 there are provided two superjacent horizontal rows of five apertures 56. Via these apertures there is attached to the arms a hook-shaped plate 57 which, by means of the said rows of apertures 56, can be locked at various distances from a frame portion. The hook-shaped plate 57 comprises two portions 57a, 57b, of which the lower portion (57b) is directed rearwardly and substantially downwardly and the upper portion (57a) substantially rearwardly. Between the lower portions 57b of the hook-shaped plates 57 there is arranged freely rotatably the roller 4 by means of shafts 58, which are supported in bearing housings. In this embodiment, the roller 4 is in the form of a packer roller which comprises a cylindrical portion 61 having at its outer circumference equally interspaced crowns of cams 62. Between the respective crowns of cams 62 there are located scrapers 63. Each of the scrapers 63 is present at the lower end of an obliquely upwardly and rearwardly extending arm 64. The arms 64 together are attached to a carrier 65, which extends at least substantially parallel to the axis of rotation of the roller 4. This carrier 65 is arranged near the end of the upper portions 57a of the hook-shaped plates 57.

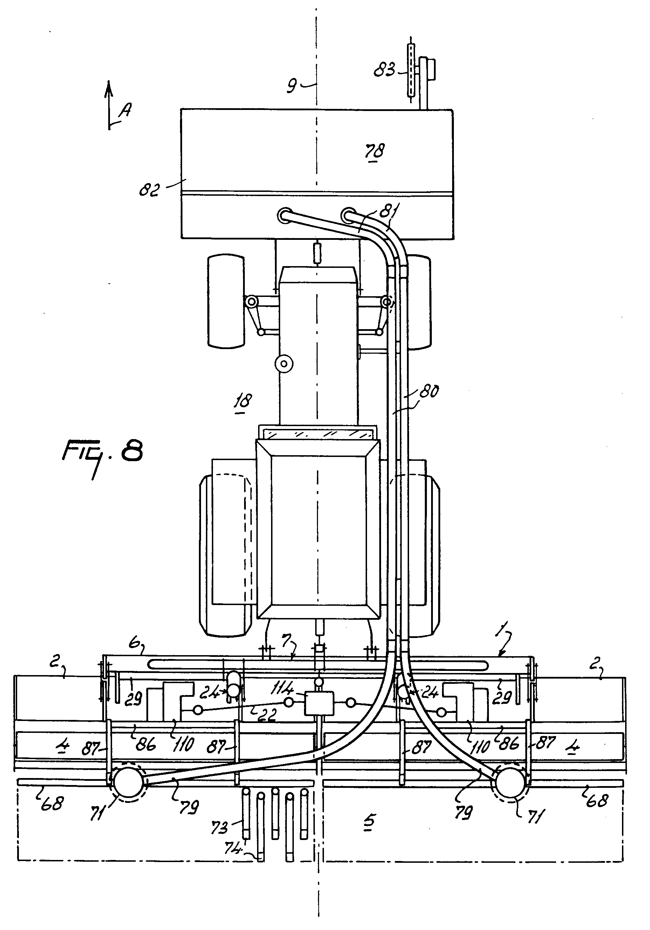

On each frame portion 2 there is arranged by means of an adjustable, but rigid carrier structure a carrier beam 68 for the seed drill 5, which carrier beam 68 extends transversely to the direction of operative travel A and through the entire working width of a frame portion 2. On the outer half of each carrier beam 68 there is secured a square upright beam 69, at the upper end of which there are provided clamping means 70, by means of which a distributing mechanism 71 can be supported. The carrier beam 68 is located at least substantially parallel to a frame portion 2. On the carrier beam 68 there are attached side by side seed tubes 73, which at their lower ends are provided with seed coulters 74. Seen transversely to the direction of operative travel A of the machine, the seed coulters 74 are arranged alternatingly in a shifted position relative to each other, while at the rear sides thereof there are provided resilient tines 75. By means of a flexible tube 76, each of the seed tubes 73 is connected to the distributing mechanism 71 of a pneumatic seed drill 78 (Figure 8). Each of the distributing mechanisms 71 is connected via a flexible supply tube 79 to a rigid tube 80 which is secured alongside the tractor. At the front side of the tractor, the rigid tube 80 is connected via an other flexible tube portion 81 to a (non-shown) fan and to a hopper 82. The hopper 82 and the fan are mounted on a frame arranged at the lifting hitch provided at the front side of the tractor. During operation, this rigid frame may be supported by a roller extending transversely to the direction of operative travel A and being in the form of a packer roller. The fan can be driven from the power take-off shaft at the front side of the tractor, while a feeding mechanism for the supply of seed material from the hopper can be driven via a stepper wheel 83 which moves over the soil.

The seed drill carrier structure 67 comprises a rigid framework consisting of one front round beam 86 and two square hollow beams 87 fixed against the ends thereof. The round beam 86 extends near the rear side of a frame portion 2 thereabove and parallel thereto, namely between the two upright attachment plates 13. The two side beams 87 extend along the longitudinal centre line 9 of the machine. At the rear ends of the beams 87 there is telescopically slidable thereinto a square beam 88 of smaller dimension. The beams 87 and 88 can be fixed relative to each other by means of a pin/aperture connection having a plurality of apertures. At the rear end of the smaller beam 88 there are fixed two lugs having a hook-shaped lower end. This construction allows of a pivotal connection. The hook is suited to support a pin which can be inserted through two lugs attached to the upright beam 69 of the seed drill 5. At their front ends, the side beams 87 of the afore-mentioned framework are pivotable about a shaft 90 that is arranged in an extension plate 91. By means of two heavy bolts 92, this extension plate 91 is screwed rigidly against the lower end of the supporting plate 13. The, relative to the centre 9 of the machine, most outwardly extension plate 91 is designed so as to have a portion 94 extending upwardly behind and around the lower pivot point 14b, which portion, at its upper side, merges into a rearwardly extending beak-shaped portion 95. In the beak-shaped portion 95 there is provided an aperture 96 which is suitable to be pivotably connected to a coupling link 97 of an adjustable link 98. By means of a single lug 99 that can be slipped around a shaft 100 onto the relevant side beam 87, the adjustable link 98 is connected at its other end to the afore-mentioned framework. Thus, by turning the adjustable link 98, it is possible to effect a height adjustment of the seed drill 5 relative to the relevant frame portion 2. It may be obvious that the rigid connection between the side beams 87 and the intermediate round beam 86 together with the two pivot points at the frame portion 2 ensure that the height adjustment is transferred to two spaced apart positions on the carrier beam 68 of the seed drill 5.

Near the top end of the upwardly extending portion of the outer extension plate 91, at approximately 10 cms below the beak-shaped portion, there is arranged a shaft 103. This shaft 103 is suitable for connecting thereto an adjustable link 104 having a lug end 105. This second adjustable link, which is of a lighter construction than the aforementioned one, has at its other end also a lug, by means of which it is attached to the upright beam 69 of the seed drill 5. It may be obvious that by means of this construction the position of the seed drill, and hence that of the seed coulters, can be influenced. Both lug ends 105 of the adjustable link 104 are provided with two bores, so that greater distance adjustments of the subjacent telescopic beams 87 and 88 can be followed.

Inside each of the frame portions 2 there are mounted on the shafts 40 of the respective soil working members cylindrical gearwheels 109, the arrangement being such that the gearwheels on the shafts 40 of adjacent soil working members 3 are in driving connection with each other. Near the centre, the shaft 40 of a soil working member 3 is extended upwardly and reaches by means of this extension to into a gear box 110, wherein transmission means are located. Inside the gear box 110, the extension is in driving connection via a bevel gear transmission with a shaft which extends transversely to the direction of operative travel and is supported in the gear box, the said shaft being in driving connection via a speed variator 111 located at the outside of the gear box with a central shaft 113, which also extends transversely to the direction of operative travel, of a central transmission box 114. Deliberately, the shaft 112 has been arranged not straight above the afore-mentioned extension, but in such a manner therebeside that it is present above the frame portion part which is located behind the centre. The driving connection between the two shafts 112 and 113 consists of a telescopic coupling shaft 22 provided with universal joints. The central transmission box 114 is mounted on a support located at the rear side of the frame 1. The support consists of two I-profile beams which are attached to the lower beam of the frame at an identical angle of from 10 to 30 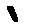 , but preferably 20 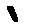 . These beams support the said central transmission box 114 by means of a bolt/nut connection provided in a plate arranged on the bevel ends of the I-beams and in suitable carrier lugs present on the transmission box 114. Between the two I-beams there is arranged a plate bent in U-shape as a reinforcement. This reinforcement plate is welded at its respective edges onto the two I-beams and onto the lower beam of the frame 1. Hereby it is prevented that the I-beams become dislocated as a result of the heavy moments which can be transferred from the tractor via a coupling shaft. Inside the central gear box 114, the shaft extending transversely to the direction of operative travel A is in driving connection via a bevel gear transmission with a shaft 118 which extends in the direction of operative travel A and which projects from the gear box both at the front side and at the rear side. The shaft end projecting at the front side is connected to the power take-off shaft of the tractor via an intermediate shaft.

Since the total weight of the wide combination is very high, the defined lifting device 24 and the parallelogram partial structures 11 derive their shape and dimension from the necessity of designing the frame portions as closely as possible against the tractor 18, i.e. as closely as possible against the frame 1. In the horizontal working position of the parallelogram arm, the distance between the front side of a frame portion 2 and the rear side of the lower frame beam 6 is 2.5 cms, measured horizontally between the projections of said respective sides. The length of the parallelogram arms 12a and 12b is 30 cms, the width of the frame portions 39.5 cms and the sides of the square frame beam 6 measure 15 cms. The difference in height between the pivot points 14a, 14b and 17a, 17b of the parallelogram is 18 cms. The frontmost pivot point 17a is located at 7.5 cms above the frame beam 6. The pivot point 32 of the lever mechanism 27 is located at 10 cms behind the vertical centre line of the frame 1 and at 4 cms above the lower frame beam 6. Measured from the centre of the pivot points 32, the front lever arm 28a has a length of 15 cms and the rear lever arm 28b a length of 22.5 cms. The two lever arms 28a and 28b of the lever 28 include an angle of 120 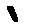 . With respect to the construction of the frame portions, it may furthermore be obvious that the end plate 44, the lifting plate 35 and the supporting plate 13, both individually and in combination, contribute to the reinforcement of the profile of the frame portions 2. It will also be obvious that the combination of frame 1, frame portions 2 and rollers 4 corresponds to a rotary harrow. Like in a rotary harrow, the frame portions 2 are provided with a stone beam construction 120. Of course, it is also possible to provide the frame portions 2 with a crumbling beam and/or levelling beam located between a frame portion 2 and the roller 4.

The soil cultivating machine as described in the foregoing operates as follows.

During operation, in the above-described combination, the machine is coupled via the three-point trestle of the frame 1 to the three-point lifting hitch of the tractor, while from the power take-off shaft there is obtained via a coupling and the above-described transmission such a drive of the soil working members 3 that adjacent soil working members 3 rotate in opposite directions and cultivate adjacent or overlapping strips of soil.

During operation, by means of the fan present at the front side of the tractor, the seed material supplied from the hopper 82 having e.g. a feeding mechanism that is driven by the stepper wheel 83 rolling over the soil is conveyed via the tubes 79, 80, 81 to the respective distributing mechanisms 71, after which it is introduced via the flexible tubes 76, the seed tubes 73 and the seed coulters 74 into the freshly cultivated soil. Using the above-described implement, it is possible in one operating run to effectively cultivate a comparatively wide (approximately 6 meters) strip of soil and simultaneously sow same.

In an ideal working position of the frame portions 2, the arms of the parallelogram partial structures 11 are directed slightly rearwardly and downwardly, but substantially horizontally. In order to be able to check this position, there is provided an indicator means 121. This indicator means 121 comprises a scaled plate 122 directed towards the driver's seat of the tractor, which plate is connected via an arm 123 to the upwardly directed supporting plate 15b for the pivot connection of the parallelogram arms 12 with the lower frame beam 6. At the upper parallelogram arm 12a there is fixed a pointer 124, the pointed end of which is folded over the plate 122. The plate 122 includes two bright colours, the one of which is arranged on the central portion thereof and the other on the end portions. The folded point of the pointer 124 has a dark colour, so that at a single glance it can be checked whether the pointer is present above the central portion, i.e. that the frame portions are in a favourable working position. In case the pointer is not present above the central portion, then the lifting hitch of the tractor 18 has to be operated in such a way that the correct position is attained. During turning on the head land, however, this position need not be changed. Due to the presence of a separate lifting device for the frame portions, upon turning it is possible that only an upward and downward movement of the hydraulic system present for this device will suffice. During the "upward" movement, the hydraulic system moves the cylinder in such a way that the frame portions 2, and hence the seed drill 5 with the seed coulters 74, are lifted sufficiently high above the soil so as not to be damaged or dislocated by contact therewith upon turning. After turning, by the "downward" movement there is automatically returned to the earlier attained favourable working position, which is attained by means of the lifting hitch of the tractor. The hydraulic system of the lifting device for the frame is such that the two cylinders can be lifted simultaneously and to the same extent.

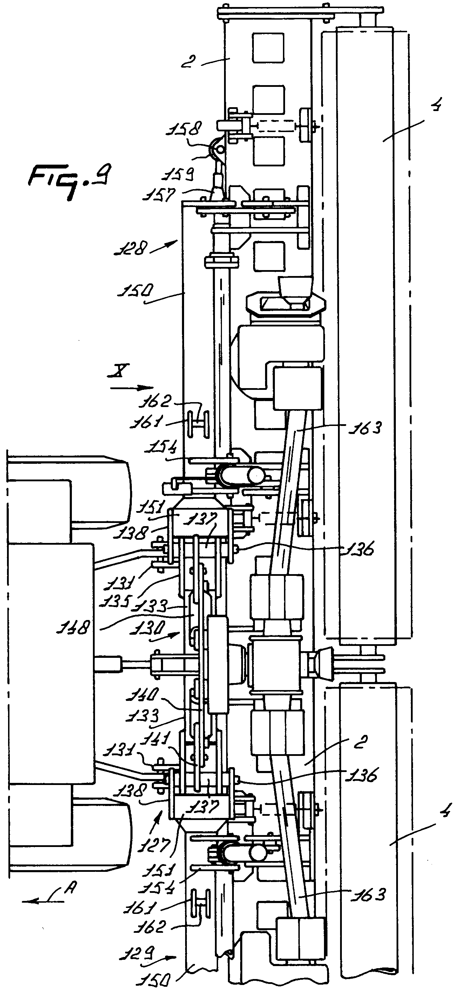

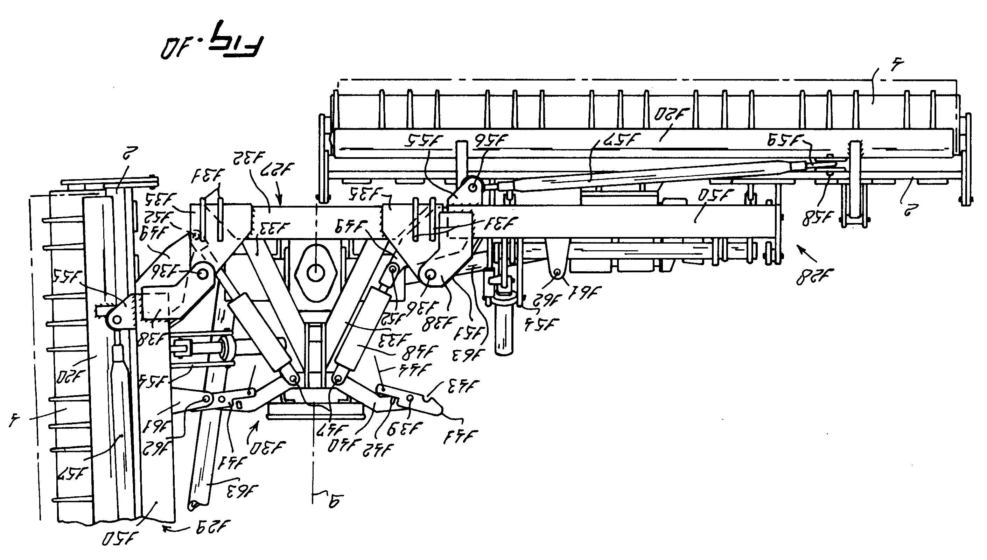

In a second embodiment, as has been shown inter alia in Figures 9 and 10, the machine frame consists of three sections 127, 128 and 129. In what follows, this frame will be indicated by the term "main frame" and the individual sections thereof by the term "main frame section". The three sections of the main frame are a central main frame section 127, which includes a trestle 130 having pairs of lugs 131 for the purpose of coupling to the three-point lifting hitch of a tractor 18, and on either side thereof further main frame sections 128 and 129, each of which is connected pivotably at one end to the central main frame section 127. In a corresponding manner as in the first embodiment, to each of the main frame sections 128, 129 there is connected a frame portion 2 having drivable soil working members 42 fitted therein.

The trestle 130 of the central main frame section 127 is constituted by a horizontal frame beam 132 and two shores 133 which in the shape of an inverted V are arranged at each other and at the frame beam 132. The ends of the frame beam 132, which has a square profile, are made oblique at an angle of approximately 45 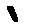 , so that the upper side of the frame beam 132 is shorter than its lower side. To the front and rear ends of the frame beam 132 there are attached pivot plates 135, which extend sidewardly beyond the frame beam 132 approximately 7 cms and upwardly approximately 21 cms. At approximately 16 cms above a frame beam end there are arranged in the plates 135 apertures to accommodate a pivot shaft 136 connecting the central main frame section 127 to a further main frame section 128, 129. The shaft 136 is arranged in a bushing 137 which, after having been passed through fitting apertures in the plates 135, is rigidly connected thereto and which extends fittingly between two pivot plates 138 of a main frame section 128, 129. The distance between the two pivot shafts 136 is 105 cms. In order to ensure a long-lasting and smooth pivotal movement, between the shaft 136 and the bushing 137 there are fitted rings of synthetic material.

Against the top end of the trestle 130 there is arranged a transversely extending arm 140, cut from thick steel plate, which arm, for the purpose of a rigid connection, is also connected to the rear side of the upper lugs 131 of the trestle 130. The arm 140, which in front view is wing-shaped, comprises a horizontally extending central portion which, at approximately 10 cms from the centre of the machine, merges on either side via a bend into a substantially obliquely upwardly directed portion, at the end of which there is arranged pivotably about a shaft 139 a locking hook 141. The locking hook 141 is movable in a vertical plane and bears with its upper side against a stop 142 fastened to the arm 140 between the shaft 139 and the centre line 9 of the machine. The outer end of the hook 141 constitutes an oblique face, the upper side of the hook 141 being longer than its lower side. The locking hook 141 is furthermore provided at its one end with a recess 143 and at its other end with a length of rope 144, by means of which the latter end can be pulled in the downward direction.

In the position of the bend in the arm 140 there is arranged an aperture to accommodate a shaft 147 which connects a pair of lugs of the housing of an adjusting cylinder 148 to the arm 140, and hence to the trestle 130. In the operative position, the adjusting cylinder 148 extends parallel to one of the shores 133 of the trestle 130 and, via the free end of the piston rod, is connected to a lever plate 149 of a relevant main frame section 128, 129.

Each of the main frame sections 128, 129 comprises a frame beam 150 having the same size as the lower frame beam 132 of the trestle 130. At its front and rear sides, the frame beam end bordering on the central main frame section 127 is provided with pivot plates 138. At the level of the upper side of the frame beam 150, these pivot plates 138 diverge at an angle of approximately 45 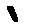 with a vertical and at some height above the beam are bent again in a vertical plane. The vertically bent portion of the pivot plate 138 extends in transverse direction to the space above a lower pair of lugs 131 of the trestle 130. The pivot plates 138 are provided with an aperture fitting for the shaft 136 and are interspaced at such a distance that the bushing 137 accommodating the pivot shaft 136 is enclosed fittingly. Between the pivot plates 138 there is furthermore provided a strengthening plate 151.

Against the frame beam end face bordering on the central main frame section 127 there is arranged a lever plate 149 which extends in a vertical plane from the lower side of the beam 150 obliquely upwardly and in the direction of the centre line 9. A part of the edge of the plate 149 borders on the oblique end of the central frame beam 132 at some distance therefrom and parallel thereto, while an other part extends at some distance from a shore 133 and parallel thereto. At approximately 15 cms above the main frame beam 132, the lever plate 149 is provided with an aperture to accommodate a shaft 152, via which the lever plate 149 is connected to the piston rod of the adjusting cylinder 148. At the upper side of a frame beam 150, the lever plate 149 extends below the pivot shaft 136 and between the pivot plates 138 inwardly, so that the lever plate 149 is connected partly to the upper side of the frame beam 150.

At approximately 90 cms from the centre line 9 of the machine there is arranged pivotably at a frame beam 150, between two lugs 15 extending to the space thereabove and therebehind, an adjusting cylinder 25. This adjusting cylinder 25 operates a lever mechanism 27 for lifting a frame portion 2, which lever mechanism 27 corresponds to that of the first embodiment.

At its end bordering on the central main frame section 127, a frame beam 150 is connected at its lower side, via a downwardly extending pair of lugs 155 and a shaft 156 extending in the direction of operative travel, to a stabilizer rod 157 which extends obliquely rearwardly and downwardly to a shaft/lug construction 158 arranged against the front side of a frame portion 2 at approximately a quarter of the length thereof, taken from its outer end. For the coupling to a shaft/lug connection, the stabilizer rod 157 is provided on either end with an eyelet 159 screwed therein. The eyelets 159 include a screw portion to be screwed into a threaded end portion of the stabilizer rod 157. This allows of a change in length of the stabilizer rod 157 by turning same between the eyelets 159.

On the upper side of the frame beam 150, at approximately one third of its length, taken from the inner end, there are provided two lugs 161. These lugs 161 are rigidly interconnected at their top ends by means of a pin 162 extending in the direction of operative travel A. When a frame portion 2 is moved to the transport position, the pin 162 contacts the oblique face of the locking hook 141 and urges the locking hook upwardly, after which the pin 162 is caught by the recess 143.

At the rear side of the central main frame section 127 there is arranged via shores 117 a transmission box 114 which for the purpose of the drive of the machine can be coupled to the power take-off shaft of the tractor 18. In this connection, seen in front view approximately in the centre of the space between the shores 133, there is provided a shaft which extends through the transmission box 114 in the direction of operative travel and which at its rear end is also suitable for coupling thereto a coupling shaft. The transmission box 114 includes two sideward shaft exits, to which are coupled sidewardly, rearwardly and downwardly extending coupling shafts 163, by means of which are driven the soil working members 42 of the two frame portions 2. These two shaft exits of the central transmission box 114 are located behind the transverse centre of a frame portion 2.

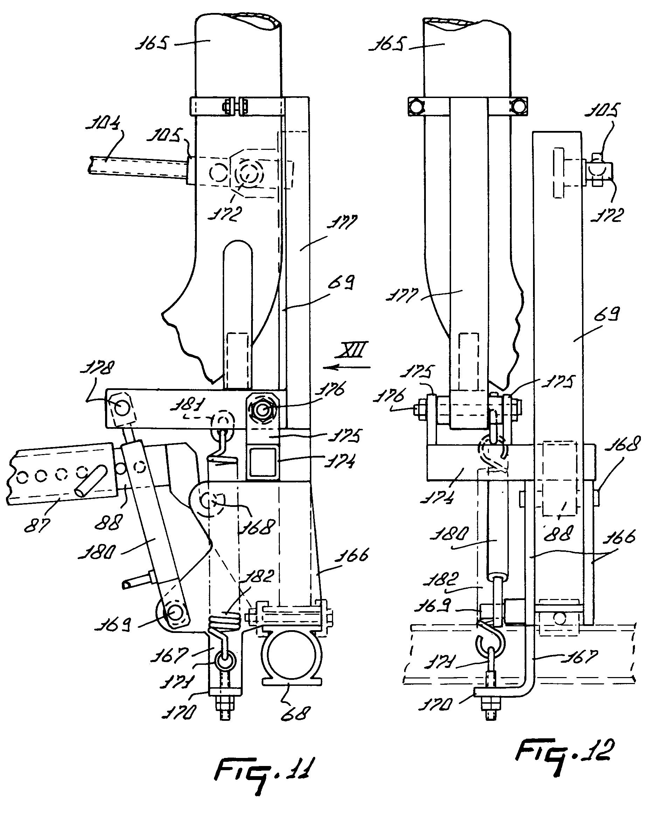

Like in the first embodiment, it is possible to provide a frame portion 2 with a seed drill 5. The present seed drill 5 differs from the embodiment already described by the attachment construction of the supply tube or vortex tube 165, to which the distributing mechanism 71 is fitted. In what follows, this construction will be described with reference to Figures 11 and 12.

By means of lugs 166, through which is inserted a pin 168, the seed drill 5 is suspended from the hook at the end of the telescopic beam 88. The lugs 166 are located at the upper side of the carrier beam 68 of the seed drill. One of the lugs 166 includes a projection 167 which, seen in side view, is located in the space below the hook at the beam 88 and in front of the carrier beam 68. At the level of the carrier beam 68, to this projection 167 there is arranged a shaft 169 which is directed horizontally and transversely to the direction of operative travel. At the level of the lower side of the carrier beam 68, the projection 167 includes a bent portion 170, to which is attached an eyelet 171. On the upper side of the carrier beam 68 and between the pair of lugs 166 there is secured an upright beam 69 which near its upper end is provided with a shaft 172, by means of which it is connected to the lug end 105 of the adjustable link 104 (see Figure 6).

Against the upper side of a pair of lugs 166 of the carrier beam and the front side of the upright beam 69 there is fitted a square-profiled cross piece 174 which, seen in the rear view of Figure 12, transversely to the direction of operative travel includes a projection of approximately 10 cms. On the end of this projection there is provided a pair of lugs 175, through which, transversely to the direction of operative travel, is inserted a shaft 176. Via this shaft 176, a support 177 for the vortex tube 165 is connected pivotably to the cross piece 174 and hence to the carrier beam 68 of the seed drill. The support 177 is connected to the vortex tube 165 in such a manner that, during operation, the upright portion thereof is directed vertically in the space above the pivot shaft 176.

Near the front end of the support 177 there is arranged, transversely to the direction of operative travel A and horizontally, a shaft 178, via which the support 177 is connected pivotably to the piston rod of an adjusting cylinder 180, the housing of which is also connected via the shaft 169 to the projection 167 of a lug 166 at the carrier beam 68. In a position between the pivot shaft 176 and the shaft 178, the support 177 is furthermore provided with an eyelet 181, in which is hooked one end of a spring 182, the other end of which is hooked in the eyelet 171 of the projection 167 of a lug 166 at the carrier beam 68.

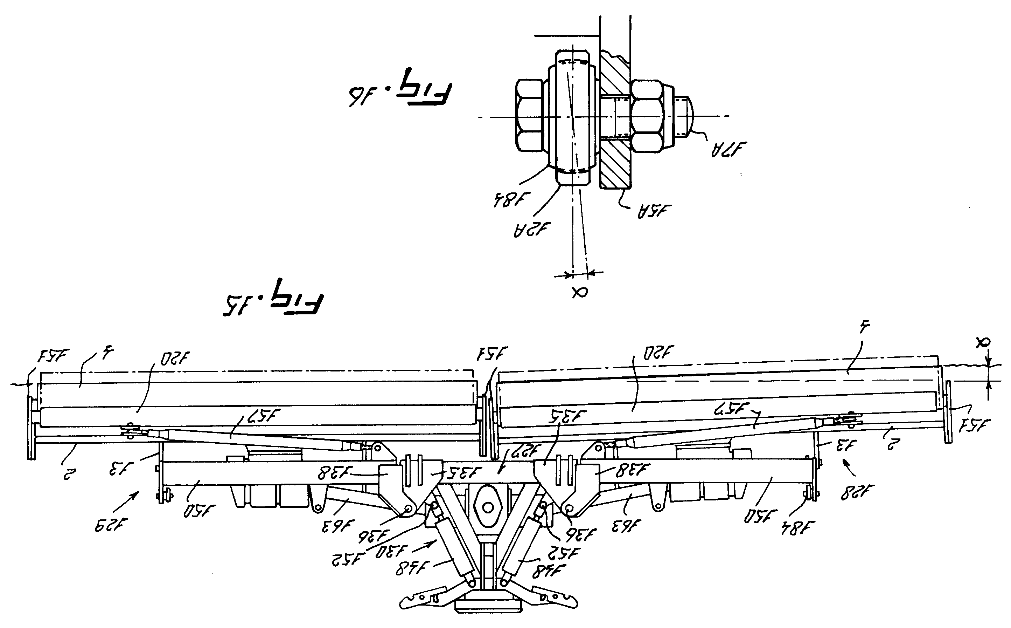

In the positions of the pivot points 14A, 14B, 17A, 17B of the arms 12A and 12B of the parallelogram structure 11 there are arranged ball joints 184, as shown in Figure 16. Using these, as is shown in Figure 15, it is ensured that each of the two parallelogram structures 11, by means of which a frame portion 2 is coupled to the frame 1 or to a frame section 128, 129, can be moved in height to some extent, independently of each other. As a result, it is possible that a frame portion 2 adapts itself at an angle with a horizontal to a local unevenness in the soil, as has been indicated in Figure 5 for the left-hand frame portion 2. In the case of unevennesses in the soil surface, the use of ball joints 184 prevents the arms 12 and the plates 15, 21 from bending, or eventually breaking, due to the weight of a frame portion 2 inclined at an angle with the frame. Such a construction using ball joints is of particular importance when there are coupled to a main frame several frame portions 2 having soil working members 42, like in the present case.

Ensuing from their nature, the ball joints 184 afford a frame portion 2, in addition to the said freedom of movement in the vertical direction, also a freedom of movement in the horizontal direction. This is undesirable, in particular in the present embodiments wherein, during operation, two heavily shaking frame portions 2 are active at a very short interspace. Therefore, according to the invention, the freedom of movement of a frame portion 2 in the horizontal direction is limited to a considerable extent by means of the stabilizer rod 157. The stabilizer rods 157 are designed as adjustable links, by means of which there can be obtained such an adjustment of a frame portion 2 relative to the frame that, when a frame portion 2 is in an oblique position as shown in Figure 15, the facing ends of the rollers 4, or their facing arms, do not contact each other.

Furthermore, regardless of the manner of suspension of a frame portion 2 relative to a main frame section, the stabilizer rod 157 has a function of relieving this suspension in machines which are foldable in sections for the purpose of transport. During transport, the carrier structure is loaded in a direction which is at least substantially parallel to the pivot pins thereof. As a result, the arms 12A, 12B may bend and the ball joints, if applied, may be dislocated.

The machine according to the second embodiment can be adjusted to a transport position by activating the hydraulic cylinders 148. Then, the shaft 152 is pushed downwardly, which allows a main frame section 128, 129 together with a frame portion 2 to move about the pivot shaft 136. At the end of the movement, the frame beams 150 are directed towards each other with their free ends at an angle of 2 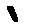 with a vertical. Due to this measure, the total width of the machine in the transport position is brought within the legally allowed limit, which in many countries is 3 metres.

In foldable machines provided with a seed drill 5 is of importance the construction in which the distributing mechanisms 71 are located both at the left-hand side or at the right-hand side of the centre of a frame portion 2. As a result, it is possible to adjust the machine to the transport position, without a distributing mechanism 71 colliding with that of the opposite frame portion 2 or getting entangled in the seed supply tubes 76 thereof. However, it is possible to locate the distributing mechanisms 71 at various distances from the pivot point 136, relative to which a frame portion 2 provided with seed drill is pivotable.

In the foldable design of the machine, the pivotability of the distributing mechanism support 177 is also of importance. The action thereof is such that, during operation, the adjusting cylinder 180 has its shortest length, and that the vortex tube 165 is directed vertically. Simultaneously with the folding of the machine, the adjusting cylinder 180 for the distributing mechanism support 177 is activated, as a result of which the front end of the support 177, seen in the side view of Figure 11, is moved upwardly and the distributing mechanism 71 over approximately 40 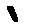 rearwardly. During transport, this position is locked hydraulically via a non-shown switch element. The removal of this locking, which is effected automatically when the machine is adjusted to the operative position, results in the spring 182 pulling the vortex tube support 177 again to said operative position. Dependent on the dimensions of e.g. the vortex tube 165 or the positionings of e.g. the vortex tube 165 or of the support pivot shaft 176 thereof, there may be applied other angles and/or other folding devices for the vortex tube 165.

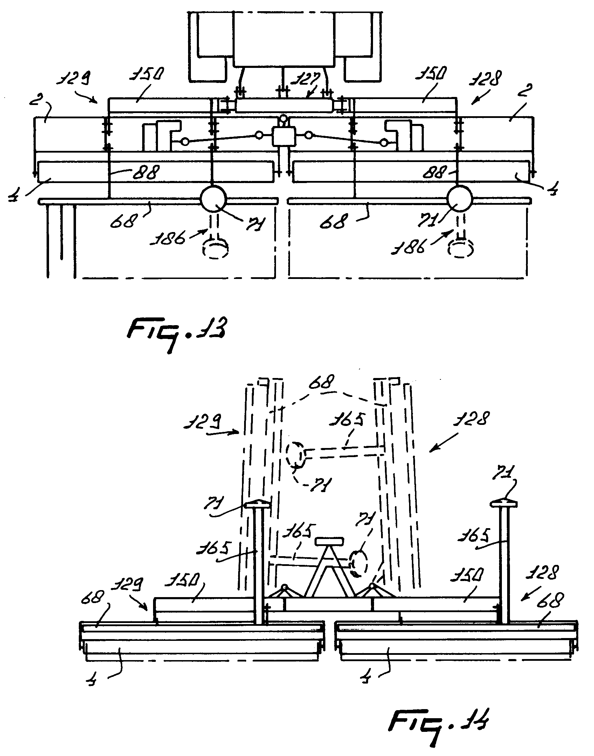

Due to its adjustment, the distributing mechanism 71 is brought so far rearwardly (see position 186 in Figure 13) that it is located behind the space above the carrier 68 and the pivot points of the seed tubes 73 therewith (see the side view of Figure 6). The said angle of adjustment means that the frame portions 2 can be arranged in the transport position as indicated by interrupted lines in Figure 14, without a distributing mechanism colliding with a carrier 68 of the opposite seed drill 5 or with the seed tubes 73 thereof. In establishing the said angle, it has been taken into account that the folding of the machine is preceded by a lifting movement for removing the rotors 42 and the seed coulters 74 from the soil. Furthermore, the said angle applies to the highest possible position to be attained by the carrier 68 via the adjustable link 98. In the highest position of the carrier and in the lifted condition of the rotors 42, the carrier 68 is located level with a main frame beam 150.

The invention is not restricted to the above, but also concerns all the details of the drawings, whether they have been described or not.

## Claims

1. A soil cultivating machine, in particular a rotary harrow, comprising a first frame portion (1) couplable to a tractor, a second frame portion (2) coupled movably in height relative to the first frame part (1), provided with soil cultivating members (3) and suspendable from the soil by a roller (4), the machine further comprising drilling elements including seed pipes (73), possibly provided with coulters (74) and coupled to a carrier beam (68), characterized in that the the carrier beam (68) is connected to the second frame portion (2) by means of a framework (86, 87, 88) stretching from the second frame portion in rearward direction over a location for the roller in the machine and comprising at least two spaced apart beams (87, 88) extending predominantly in the direction of operative travel and mutually connected by at least a coupling beam (86), the framework (86, 87, 88) being hingeably connected to the second frame portion (2) and being kept in position and being adjustable in height by means of at least one adjusting member (98) connected with the second frame portion(2).

2. A soil cultivating machine according to claim 1, characterized in that a supporting element (13) is provided on a top side of the second frame portion (2), directed upwardly and predominantly in the direction of operative travel (A), and comprising an upwardly directed plate-shaped part.

3. A soil cultivating machine according to claim 1 or 2, characterized in that the connection (11, 13) between the first and second frame portion (1; 2) comprises said supporting element (13).

4. A soil cultivating machine according to claim 1, 2 or 3, characterized in that the adjusting member (98) is connected with the supporting element (13).

5. A soil cultivating machine according to any one of the preceding claims, characterized in that the connection between the carrier beam (68) and the second frame portion (2) comprises a further adjusting member (104) for adjusting the position of a distributor member (71, 165) coupled to the carrier beam (68).

6. A soil cultivating machine according to any one of the preceding claims, characterized in that the adjusting member (98) for the framework (86, 87, 88) is located excentrically thereof in respect of the direction transverse to that of travel of the machine.

7. A soil cultivating machine according to any one of the preceding claims, characterized in that the coupling beam (86) extends near the hinge (90) connecting the framework (86, 87, 88) with the second frame portion (2).

8. A soil cultivating machine according to any one of the preceding claims, characterized in that an adjusting member (98, 104) is connected with the second frame portion (2) via a supporting element (13).

9. A soil cultivating machine according to any one of the preceding claims, characterized in that an adjusting member (98, 104) is connected to a supporting element (13) via an extension member (91) mounted to a lower portion of the supporting plate (13).

10. A soil cultivating machine according to any one of the preceding claims, characterized in that the machine comprises two individual frame portions (2) with individual carrier beams (68) which, together with a first frame portion (1) are upwardly foldable around horizontal axes (136) extending predominantly in the direction of operative travel (A) of the machine and in that distribution members (79, 165) are mounted to each carrier beam (68) in the proximity of the same connecting beam (87, 88) of the respective frameworks (86, 87, 88).
